Europäisches Patentamt

(19) **European Patent Office**

**Office européen des brevets**

(11) Veröffentlichungsnummer: **0 153 581**

**B1**

(12) **EUROPÄISCHE PATENTSCHRIFT**

(45) Veröffentlichungstag der Patentschrift:
**23.11.88**

(51) Int. Cl.⁴: **B 23 K 9/06**

(21) Anmeldenummer: **85100613.0**

(22) Anmeldetag: **22.01.85**

(54) **Verfahren zum Zünden beim Schweissen mit abschmelzender Elektrode.**

(30) Priorität: **21.02.84 DE 3406190**

(43) Veröffentlichungstag der Anmeldung:
**04.09.85 Patentblatt 85/36**

(45) Bekanntmachung des Hinweises auf die Patenterteilung:
**23.11.88 Patentblatt 88/47**

(84) Benannte Vertragsstaaten:
**AT BE CH FR GB IT LI NL SE**

(56) Entgegenhaltungen:
**AT-B-355 141**
**DE-A-2 939 045**

(73) Patentinhaber: **MESSER GRIESHEIM GMBH,
Hanauer Landstrasse 330, D-6000 Frankfurt/Main 1
(DE)**

(72) Erfinder: **Dilthey, Ulrich, Dr., Tringensteinstrasse
3, D-6340 Dillenburg (DE)**
Erfinder: **Kopp, Walter, Elisabethstrasse 45, D-8044
Unterschleissheim (DE)**

EP 0 153 581 B1

**Beschreibung**

Die Erfindung betrifft ein Verfahren zum Zünden beim Schweißen mit abschmelzender Elektrode nach dem Oberbegriff des Anspruchs 1.

Beim Zünden wird durch die Berührung der Drahtelektrode mit dem Werkstück der Stromkreis geschlossen und es fließt kurzzeitig ein Stoßkurzschlußstrom. Dabei soll die Stromdichte so groß sein, daß das Drahtelektrodenende an der Berührungsstelle schlagartig weggeschmolzen wird und sich ein Lichtbogen ausbildet.

Es ist beim Schweißen mit einer Stromquelle mit fallender Kennlinie bekannt, sobald eine ausreichende Annäherung zwischen der Drahtelektrode und dem Werkstück erfolgt ist, den Schweißlichtbogen durch Hochfrequenzüberschläge zu zünden.

Diese Hochfrequenzüberschläge sind erforderlich, da bei Stromquellen mit fallender Kennlinie der Stoßkurzschlußstrom und damit die Stromdichte zur Zündung des Lichtbogens oft nicht ausreicht. Solange jedoch ein Strom durch das Werkstück und die Schweißelektrode bei direktem Kontakt der beiden fließt, welcher unter der für das Wegschmelzen des Kontaktteils der Elektrode erforderlichen Größe liegt, wird die Elektrode auf dem Oberflächenteil des Werkstückes geschmolzen, ohne daß ein Lichtbogen zwischen beiden gezündet wird. In diesem Fall kann ein Lichtbogen erst gezündet werden, wenn der entsprechende Kurzschlußstrom genügend Wärme in dem zugehörigen Widerstand erzeugt hat, um die Schweißelektrode vom Werkstück wegzuschmelzen. Dabei kann zur Zündung des Lichtbogens das erforderliche Zeitintervall in einem Bereich von einigen bis zu 10 Sekunden liegen.

Zur Behebung dieser Nachteile ist es nötig, ein Hochfrequenz-Zündgerät bereitzustellen, das kostenintensiv ist und funktechnische Störungen verursacht.

Der Erfindung liegt die Aufgabe zugrunde, beim Schweißen mit einer Stromquelle mit fallender Kennlinie die Zündung des Lichtbogens ohne Zündgerät in einfachster Art und Weise sicherzustellen.

Diese Aufgabe wird bei einem gattungsgemäßen Verfahren durch die kennzeichnenden Merkmale des Anspruches 1 und bei einer gattungsgemäßen Einrichtung zur Durchführung des Verfahrens durch die kennzeichnenden Merkmale des Anspruchs 3 gelöst.

Da vorzugsweise beim Unter-Pulver-Schweißen, im folgenden UP-Schweißen genannt, Stromquellen mit Konstantspannungskennlinie oder fallender Kennlinie eingesetzt werden, wobei die den Kennlinien zugeordneten Stromdichten und Lichtbogenregelungen die beim UP-Schweißen verwendeten unterschiedlichen Drahtelektrodendicken bestimmen, wird der Lichtbogen vorteilhaft unter der Pulverabdeckung gezündet.

Die mit der Erfindung erzielten Vorteile bestehen insbesondere darin, daß vor dem Schweißen mit einer Stromquelle mit fallender Kennlinie durch eine einfache Umschaltung auf eine Konstantspannungskennlinie die für eine schlagartige Abschmelzung des Drahtelektrodenendes erforderliche Stromdichte erzeugt und somit der Lichtbogen sicher gezündet wird. Nach diesem sicheren Zünden des Lichtbogens hat sich überraschend gezeigt, daß ein Umschalten von der Konstantspannungskennlinie auf die fallende Kennlinie problemlos, d. h. ohne Verlöschen des Lichtbogens, möglich ist.

Dabei wird zur Durchführung des Verfahren vorzugsweise eine elektronische Stromquelle mit umschaltbaren Kennlinien verwendet, die einen "Zündkennlinienschalter" aufweist, der vorzugsweise von einem schweißstromabhängigen und zeitgesteuerten lichtbogenabhängigen Umschaltsignal angesteuert wird. Die wechselweise Umschaltung der Konstantspannungskennlinie auf eine fallende Kennlinie mittels des "Zündkennlinienschalters" erfolgt hierbei durch die vorzugsweise automatische Ansteuerung eines vollelektronischen Steuerteils der Stromquelle, in Abhängigkeit von einem strom-, spannungs- und zeitabhängigen Signal.

Beim Zünden, bei Annäherung der Drahtelektrode an die Werkstückoberfläche liegt eine einstellbare, feste Konstantspannung mit Konstantspannungskennlinie des Leistungsteils der Stromquelle an. Nach der Ausbildung des Lichtbogens erfolgt eine Umschaltung auf die fallende Kennlinie des Leistungsteils.

Zur Umschaltung sind lichtbogenabhängige Steuersignale, wie beispielsweise Strom/Spannung, mittels einer Videokamera ermittelte Lichtbogenlängenänderungen oder andere Signale zu verwenden.

Neben dieser vorzugsweise automatischen Steuerung ist selbstverständlich auch eine Umschaltung von Hand mittels eines manuellen Schalters möglich.

**Patentansprüche**

1. Verfahren zum Zünden eines Lichtbogens beim Schweißen mit abschmelzender Elektrode, bei dem der Lichtbogen zwischen der Elektrode und einem Werkstück aufrechterhalten und von einer Stromquelle mit veränderbarer Kennlinie versorgt wird,

dadurch gekennzeichnet,

daß während des Zündens durch Berühren der Elektrode mit der Werkstückoberfläche eine Konstantspannungskennlinie eingestellt ist und nach dem Zünden auf eine fallende Kennlinie umgeschaltet wird.

2. Verfahren nach Anspruch 1,
<u>dadurch gekennzeichnet,</u>
daß der Lichtbogen unter einer
Pulverabdeckung gezündet wird.

3. Einrichtung zur Durchführung des Verfahrens
nach Anspruch 1,
<u>gekennzeichnet durch</u>
eine Stromquelle mit umschaltbaren
Kennlinien, die einen Zündkennlinienumschalter
aufweist, der vorzugsweise von einem
lichtbogenabhängigen Umschaltsignal gesteuert
wird.

## Claims

1. Process for the ignition of an arc in welding
with a melting electrode, in which the arc is
maintained between the electrode and a
workpiece and is supplied from a power source
having a variable characteristic, characterized in
that, during ignition, a constant-voltage
characteristic is established by contact of the
electrode with the workpiece surface and, after
ignition, a switch is changed over to a falling
characteristic.

2. Process according to claim 1, characterized
in that the arc is ignited under a flux cover.

3. Device for implementation of the process
according to claim 1, characterized by a power
source having switchable characteristics, which
has an ignition characteristic changeover switch
which is preferably controlled by an arcdependent changeover signal.

## Revendications

1. Procédé pour amorcer l'arc de soudage
d'une électrode consommable, procédé selon
lequel on maintient l'arc électrique entre
l'électrode et une pièce et on alimente cet arc à
partir d'une source de courant à caractéristique
variable, procédé caractérise en ce que, pendant
l'amorçage en mettant l'électrode en contact
avec la surface de la pièce, on règle une
caractéristique de tension constante et après
l'amorçage, on commute sur une caractéristique
descendante.

2. Procédé selon la revendication 1, caractérisé
en ce qu'on amorce l'arc électrique sous un
revêtement de poudre.

3. Installation pour la mise en oeuvre du
procédé selon la revendication 1, caractérisée par
une source de courant à caractéristiques
commutables, cette source comportant un
commutateur de caractéristiques d'amorçage,
qui est, de préférence, commandé par un signal
de commutation dépendant de l'arc électrique.